# EUROPÄISCHE PATENTSCHRIFT

(11) **EP 3 543 414 B1**
(45) Veröffentlichungstag und Bekanntmachung des Hinweises auf die Patenterteilung: **03.05.2023**
(21) Anmeldenummer: 18163180.5
(22) Anmeldetag: 21.03.2018
(51) Int. Cl.: E04B 1/76, E04B 1/90, E04F 13/08, E04F 15/18, E04F 15/20, E04B 1/74

(54) **NATURFASERDÄMMUNG, GEBÄUDETEIL MIT DER NATURFASERDÄMMUNG UND VERWENDUNG DER NATURFASERDÄMMUNG**
NATURAL FIBRE INSULATION, BUILDING PART WITH THE NATURAL FIBRE INSULATION AND USE OF THE NATURAL FIBRE INSULATION
ISOLATION À BASE DE FIBRE NATURELLE, PARTIE DE BÂTIMENT POURVUE D'ISOLATION À BASE DE FIBRE NATURELLE ET L'UTILISATION D'ISOLATION À BASE DE FIBRE NATURELLE

(43) Veröffentlichungstag der Anmeldung: 25.09.2019
(73) Patentinhaber: DAW SE, 64372 Ober-Ramstadt (DE)
(72) Erfinder: SCHWEMMER, Robert, 84367 Reut (DE); ENZENBERGER, Gerhard, 4922 Geiersberg (AT)
(74) Vertreter: Metten, Karl-Heinz

(56) Entgegenhaltungen:
- DE-U1-202015 003 665
- FR-A1- 2 923 505

## Beschreibung

Die vorliegende Erfindung betrifft eine Naturfaserdämmung zur Dämpfung von Schallwellen. Ferner betrifft die Erfindung einen Gebäudeteil mit der Naturfaserdämmung und eine Verwendung der Naturfaserdämmung zur Dämpfung von Schallwellen.

Die Schalldämmung von Innen- und Außenfassaden gewinnt zunehmend an Bedeutung. Angesichts der zunehmenden Siedlungsdichten in Städten besteht ein Bedarf an bautechnischen Maßnahmen, welche eine Reduktion der Schallbelastung, beispielsweise durch Verkehrslärm, ermöglichen. Aus dem Stand der Technik hinreichend bekannt ist die Schalldämmung mit Dämmstoffen wie Schaumstoffen und Synthetikvliesen. Diese lassen sich im Regelfall jedoch nicht oder nur schlecht recyceln. Auch können unangenehme oder gar schädliche Ausdämpfungen entstehen, insbesondere wenn die Dämmstoffe nicht korrekt behandelt oder hergestellt wurden. Allerdings sind beispielsweise monolithische EPS-Platten alleine erfahrungsgemäß nicht geeignet, den Schall signifikant zu reduzieren, so dass nicht beliebige synthetische Plattenzusammensetzungen den gewünschten Effekt erzielen. Eine mögliche Alternative zu diesen überwiegend synthetischen Dämmstoffen sind Naturfaserdämmstoffe. Hierbei werden Dämmstoffe aus nachwachsenden Rohstoffen zur Schalldämmung verwendet.

Auch diese sind aus dem Stand der Technik grundsätzlich bekannt.

Die EP 1 063 333 A1 offenbart einen Baustoff zur akustischen Abschottung, der wenigstens zwei einstückig miteinander verbundene Naturfaserschichten aufweist, wobei mindestens zwei unterschiedliche Schichten aus einer Schicht mit relativ groben Fasern und/oder einer Schicht mit einem Gemisch aus relativ groben und relativ feinen Fasern und/oder einer Schicht mit relativ feinen Fasern miteinander kombiniert sind.

Die DE 197 42 198 A1 offenbart eine schalldämmende Struktur mit einer Schicht niedriger Dichte mit einer ersten und einer zweiten Faserschicht und einer Oberflächendichte im Bereich von 0,5 bis 1,5 kg/m², wobei die erste und die zweite Faserschicht jeweils aus ersten und zweiten thermoplastischen synthetischen Fasern hergestellt sind, wobei die ersten und die zweiten Fasern jeweils erste und zweite Durchmesser im Bereich von 3 bis 40 µm und Faserlängen im Bereich von 10 bis 100 mm aufweisen, und einer auf der Schicht niedriger Dichte gebildeten Schicht hoher Dichte, wobei die Schicht hoher Dichteeine Oberflächendichte aufweist, die höher ist als die der Schicht niedriger Dichte und im Bereich von 1 bis 10 kg/m² liegt, und wobei die Schicht hoher Dichte aus einemluftundurchlässigen Polymermaterial hergestellt ist.

Die DE 20 2015 003 665 U1 beschreibt eine Fassadensockelplatte für Wärmedämmverbundsysteme mit einer ersten Randseite und einer gegenüberliegenden zweiten Randseite, einer bei gattungsgemäßer Verwendung fassadenseitig anzubringenden Befestigungsseite und einer gegenüberliegenden Frontseite, einer Oberseite und einer gegenüberliegenden Unterseite, wobei die Befestigungsseite und die Frontseite jeweils größer als die erste und zweite Randseite sowie die Oberseite und die Unterseite sind. Die Fassadensockelplatte hat Backkork zu umfassen oder hieraus zu bestehen. Auch hat die Fassadensockelplatte mindestens ein konstruktives Verzahnungselement zu umfassen. Zweckmäßiger Weise soll die obere Dämmplatte Hanffasern und/oder Weichholzfasern umfassen. Diese Weichholzfaserplatten und Hanffaserplatten sollen sich mit Fassadensockelplatten aus oder enthaltend Backkork dergestalt kombinieren lassen, dass diese effektiv vor Witterung geschützt werden. Die DE 20 2015 003 665 U1 ist demgemäß bestrebt, ein verbessertes und einfach zu montierendes witterungsbeständiges Schutzsystem für Fassadensockel von Wärmedämmverbundsystemen zur Verfügung zu stellen.

Ein Nachteil bestehender Schalldämmmaßnahmen mit Naturfaserstoffen ist, dass kein hinreichender Schutz vor Feuchtigkeit geboten wird. Naturfaserstoffe weisen im Regelfall eine hohe Saugfähigkeit auf und sind zumeist sehr feuchtigkeitsempfindlich. Wenn Feuchtigkeit eindringt, kann die Schalldämmung beispielsweise durch Kapillarkräfte ihre Wirkung verlieren und dabei insbesondere mit Schimmel, Bakterien oder Algen befallen werden. Naturfaserstoffe enthalten oftmals auch Nährstoffe, die einen solchen Befall fördern. Es gibt zwar grundsätzlich bautechnische Maßnahmen, die diese Gefahr verringern können, allerdings müssen diese vor Ort fachgerecht und aufwändig umgesetzt werden, was die Kosten erhöht und bei einem Fehler in der Umsetzung zu Schäden führen kann.

Die Aufgabe der vorliegenden Erfindung ist es, eine Naturfaserdämmung bereitzustellen, die einen verbesserten Schallschutz bietet und zudem die vorstehend genannten Nachteile überwindet sowie einen verbesserten Schutz vor Feuchtigkeit umfasst. Auch ist es eine Aufgabe eine Naturfaserdämmung bereitzustellen, die einfach zu verbauen ist. Ferner ist es eine Aufgabe, einen Gebäudeteil und ein Verfahren mit besagter Naturfaserdämmung bereitzustellen.

Die Aufgabe wird gelöst durch eine Naturfaserdämmung, insbesondere Naturfaserschalldämmung, umfassend eine Außenschicht und eine der Außenschicht gegenüberliegende Innenschicht, wobei die Innenschicht mindestens eine Naturfaserdämmplatte und mindestens ein Abdichtsegment aufweist, wobei die Außenschicht mit der Naturfaserdämmplatte und mit dem Abdichtsegment verbunden ist, insbesondere flächig mit der Naturfaserdämmplatte und/oder dem Abdichtsegment verbunden ist, wobei die Naturfaserdämmplatte ein erstes Dämmmaterial mit mindestens einem Naturfaserstoff umfasst, wobei das Abdichtsegment ein, insbesondere synthetisches, zweites Dämmmaterial, welches feuchtigkeitsresistent ist, umfasst, wobei das zweite Dämmmaterial eines oder mehrere feuchtigkeitsresistente Materialien ausgewählt aus der Gruppe bestehend aus EPS, XPS, Mineralwolle, Glaswolle, Schaumglas und Kokosfaser umfasst und wobei die Außenschicht eine oder mehrere Trockenbauplatten umfasst und insbesondere aus diesen besteht.

Es hat sich gezeigt, dass eine vorgefertigte Naturfaserdämmung mit den obigen Eigenschaften sich besonders einfach verbauen lässt, verbesserte Dämmeigenschaften aufweist und zugleich besser vor Feuchtigkeit schützt.

Ein Abdichtsegment im Sinne der vorliegenden Erfindung umfasst ein, insbesondere synthetisches, zweites Dämmmaterial, welches feuchtigkeitsresistent ist, vorzugsweise sich nicht mit Feuchtigkeit vollsaugt und/oder unter dem Einfluss von Feuchtigkeit nicht aufquillt und/oder durch Feuchtigkeit nicht strukturell verändert wird. Beispielsweise kann EPS nur in geringem Maße Feuchtigkeit aufnehmen und verändert sich unter dem Einfluss von Feuchtigkeit nicht strukturell. Sobald EPS trocknet, kann es weiter verwendet werden. Vorzugsweise besteht das Abdichtsegment in einer Ausgestaltung ganz oder überwiegend aus dem zweiten Dämmmaterial. Das Abdichtsegment verhindert den Eintrag von Feuchtigkeit in das erste Dämmmaterial. Das Abdichtsegment kann zu diesem Zwecke feuchtigkeitsundurchlässig sein. Allerdings hat sich gezeigt, dass auch Abdichtsegmente geeignet sind, die nur von Feuchtigkeit nicht durchzogen werden und/oder sich nicht mit dieser vollsaugen. Insbesondere im Sockelbereich dringt Feuchtigkeit zumeist nur ein, wenn diese entgegen der Schwerkraft das Abdichtsegment durchdringt. Wenn das Abdichtsegment sich nicht, beispielswiese unter der Einwirkung von Kapillarkräften, wie oftmals bei Naturdämmstoffen, vollsaugt, kann die Feuchtigkeit das Abdichtsegment nicht entgegen der Schwerkraft durchdringen und ein effektiver Schutz ist gegeben.

Ein Material, insbesondere zweiter Dämmstoff, im Sinne der vorliegenden Erfindung ist feuchtigkeitsresistent, wenn es sich nicht oder kaum mit Feuchtigkeit vollsaugt und/oder unter dem Einfluss von Feuchtigkeit nicht oder kaum aufquillt und/oder durch Feuchtigkeit nicht oder kaum strukturell verändert wird. Vorzugsweise nimmt besagtes Material, insbesondere der zweite Dämmstoff, maximal 10 Gew.-%, insbesondere maximal 5 Gew.-% seines Eigengewichts an Wasser durch Vollsaugen auf, wenn es mit Wasser in Kontakt gebracht wird. Das besagte Material, insbesondere der zweite Dämmstoff, ist vorzugsweise geeignet, eine Barriere gegen Wasser zu bilden, das die Barriere entgegen der Schwerkraft zu durchdringen sucht. Vorzugsweise sind die feuchtigkeitsresistenten Materialien im Sinne der vorliegenden Erfindung, insbesondere der zweite Dämmstoff, geeignet, wasserundurchlässige, insbesondere wasserdichte, Barrieren auszubilden, insbesondere unabhängig von der Richtung in welcher die Schwerkraft wirkt. Vorzugsweise quillt das Material, insbesondere der zweite Dämmstoff, um weniger als 10 Vol.-%, insbesondere weniger als 5 Vol.-%, auf, wenn es Wasser aufnimmt. Vorzugsweise wird das Material, insbesondere der zweite Dämmstoff, auch nach 24 h, insbesondere 48 h, insbesondere bevorzugt 3 Monaten, Lagerung in reinem Wasser bei Raumtemperatur unter der Wasseroberfläche in einer Wassertiefe von 1 m strukturell nicht verändert.

In einer zweckmäßigen Ausgestaltung ist es vorgesehen, dass das Abdichtsegment und die Naturfaserdämmplatte nebeneinander, insbesondere unmittelbar aneinanderliegend und/oder kantenverbunden, vorzugsweise über Ränder der Naturfaserdämmplatte und des Abdichtsegment unmittelbar in Kontakt stehend, an der Außenschicht befestigt sind. Auch ist es bevorzugt, wenn die Außenschicht und die Innenschicht zusammen eine mindestens zweilagige Naturfaserdämmung ausbilden, insbesondere wobei die Außenschicht und die Innenschicht an mindestens einer Seite flächig, insbesondere vollflächig, miteinander verbunden sind. Eine flächige Verbindung zweier Elemente im Sinne der vorliegenden Erfindung liegt vorzugsweise vor, wenn die beiden Elemente über ihre Flächen verbunden sind, beispielsweise die Verbindung von flächigen Bauteilen, insbesondere Schichten oder Platten über die Flächen. Statt einer flächigen Verbindung kommt einer Verbindung über die Kanten bzw. Ränder der flächigen Bauteile, insbesondere Platten oder Schichten, auch in Betracht, wobei dies vorzugsweise als kantenverbunden bezeichnet wird. Insbesondere liegt eine flächige Verbindung vor, wenn die Elemente über eine der gegenüberliegenden Seiten, vorzugsweise Breitseiten, mit der größten Flächenausdehnung verbunden sind.

Eine Naturfaserdämmung im Sinne der vorliegenden Erfindung umfasst vorzugsweise eine Vielzahl an Naturfaserdämmplatten und Abdichtsegmenten, insbesondere besteht überwiegend aus diesen. Es ist zwar möglich, eine Naturfaserdämmung mit nur genau einer Naturfaserdämmplatte und nur genau einem Abdichtsegmente bereitzustellen, allerdings hat es sich als zweckmäßig erwiesen, zahlreiche, insbesondere mindestens 3, vorzugsweise mindestens 5, insbesondere bevorzugt mindestens 10, Naturfaserdämmplatten und/oder Abdichtsegmente zu kombinieren, welche vorzugsweise benachbart zueinander verbaut sind, insbesondere über Seitenkanten in Kontakt stehen. Vorzugsweise umfassen Naturfaserstoffe im Sinne der vorliegenden Erfindung zerkleinertes Pflanzenmaterial.

Es ist bevorzugt, wenn die Naturfaserdämmplatte um ein Vielfaches größer oder schwerer als das Abdichtsegment ist. Vorzugsweise weist die Naturfaserdämmplatte ein erstes Volumen oder erstes Gewicht und das Abdichtsegment ein zweites Volumen oder zweites Gewicht auf, wobei das erste Volumen bzw. das erste Gewicht um ein Vielfaches größer als das zweite Volumen bzw. das zweite Gewicht ist. Ein im Verhältnis kleines zweites Volumen bzw. kleines zweites Gewicht hat sich als hinreichend für einen guten Schutz gegen Feuchtigkeit erwiesen. Hierdurch kann ein deutliche größerer Teil, vorzugsweise mindestens das Vier-, mindestens das Fünf- oder mindestens das Sechsfache des zweiten Volumens und/oder des zweiten Gewichts, für das größere erste Volumen und/oder erste Gewicht vorgesehen sein. Der im ersten Volumen enthaltene Naturdämmstoff bietet einen besonders guten Schallschutz.

Vorzugsweise umfasst oder besteht das erste Dämmmaterial, insbesondere überwiegend, aus einem Naturfaserstoff oder mehreren Naturfaserstoffen ausgewählt aus einer Gruppe bestehend aus Hanf, Jute, Nessel, Flachs, Kenaf, Ramie, Raps, Sisal, Rohrkolben, Schilf, Miscanthus und Stroh, insbesondere Getreidestroh. Bevorzugt sind Hanf, Flachs, Rohrkolben, Stroh, insbesondere Getreidestroh, und Jute. In einer besonders geeigneten Ausgestaltung umfasst das erste Dämmmaterial Hanf und/oder Stroh, insbesondere Getreidestroh. Es kann sich dabei um eine Hanfplatte handeln, welche überwiegend aus Hanf gebildet ist. Besagte Naturfaserstoffe haben sich als geeignet erwiesen, um den Schallschutz innerhalb der erfindungsgemäßen Naturfaserdämmung zu verbessern.

Die Naturfaserdämmung weist vorzugsweise, insbesondere parallel zur Außenschicht, eine mittlere Höhe H1 auf, die Naturfaserdämmplatte weist vorzugsweise eine mittlere Höhe H2 auf und das Abdichtsegment weist vorzugsweiseeine mittlere Höhe H3 auf. In einer Ausgestaltung ist es vorgesehen, dass H1 im Wesentlichen der Summe aus H2 und H3 entspricht. Die mittlere Höhe der Naturfaserdämmung kann auch als erste mittlere Höhe H1, die mittlere Höhe der Naturfaserdämmplatte als zweite mittlere Höhe H2 und die mittlere Höhe des Abdichtsegments als dritte mittlere Höhe H3 bezeichnet werden. Die dritte mittlere Höhen H3 des Abdichtsegments ist vorzugsweise um ein Vielfaches, insbesondere mindestens um ein dreifaches, vorzugsweise mindestens um ein fünffaches, kleiner als die erste mittlere Höhe H1 und/oder die zweite mittlere Höhe H2. Die dritte mittlere Höhe des Abdichtsegments beträgt in einer bevorzugten Ausgestaltung 10 bis 500 mm, vorzugsweise 45 bis 300 mm, insbesondere bevorzugt 50 bis 250 mm.

Die Naturfaserdämmplatte weist vorzugsweise die zweite mittlere Höhe H2, eine erste mittlere Breite B1 und/oder eine erste mittlere Materialstärke M1 auf, insbesondere wobei die zweite mittlere Höhe H2 größer als die erste mittlere Breite B1 und die erste mittlere Breite B1 größer als die erste mittlere Materialstärke M1 ist, insbesondere bevorzugt wobei besagte Werte die Dimensionen eines im Wesentlichen quaderförmigen Naturfaserdämmplatte beschreiben. Das Abdichtsegment weist vorzugsweise die dritte mittlere Höhe H3, eine zweite mittlere Breite B2 und/oder eine zweite mittlere Materialstärke M2 auf, insbesondere wobei die dritte mittlere Höhe H3 größer als die zweite mittlere Breite B2 und die zweite mittlere Breite B2 größer als die zweite mittlere Materialstärke M2 ist, insbesondere bevorzugt wobei besagte Werte die Dimensionen eines im Wesentlichen quaderförmigen Abdichtsegments beschreiben. Höhe, Breite und Materialstärke werden vorzugsweise othogonal zueinander bestimmt, insbesondere wobei die Höhe beim gattungsgemäßen Einbau der Naturfaserdämmplatte vorzugsweise vertikal bestimmt wird.

Die Naturfaserdämmplatte und/oder das Abdichtsegment haben vorzugsweise orthogonal zur Höhe eine mittlere Breite, welche insbesondere parallel zur Außenschicht bestimmt ist. In einer Ausgestaltung stimmt die mittlere Breite, insbesondere die erste mittlere Breite B1, der Naturfaserdämmplatte mit der mittleren Breite, insbesondere mit der zweiten mittleren Breite B2, des Abdichtsegments überein. Die mittlere Breite, insbesondere die erste mittlere Breite B₁, der Naturfaserdämmplatte beträgt vorzugsweise 40 bis 120 cm, insbesondere 50 bis 80 cm, besonders bevorzugt 60 bis 65 cm. Die mittlere Breite, insbesondere die zweite mittlere Breite B2, des Abdichtsegments beträgt vorzugsweise 40 bis 120 cm, insbesondere 50 bis 80 cm, besonders bevorzugt 60 bis 65 cm.

In einer Ausgestaltung ist es vorgesehen, dass die Naturfaserdämmplatte eine erste mittlere Materialstärke und das Abdichtsegment eine zweite mittlere Materialstärke aufweist, insbesondere wobei die erste mittlere Materialstärke M1 größer als die zweite mittlere Materialstärke M2 ist oder diese im Wesentlichen gleich groß sind. Als besondere bevorzugt hat sich eine erste mittlere Materialstärke M1, die größer als die zweite mittlere Materialstärke M2 ist, erwiesen, insbesondere wobei die zweite mittlere Materialstärke 0,1 bis 3 cm, vorzugsweise 0,3 bis 2 cm, insbesondere bevorzugt 0,5 bis 1 cm, kleiner als die erste mittlere Materialstärke ausgeführt ist. Es hat sich überraschenderweise gezeigt, dass es vorteilhaft ist, wenn das Abdichtsegment mit einem Freiraum innerhalb des Dämmsystems hinterlegt ist. Dies wirkt sich positiv auf die Schalldämmung aus. Vorzugsweise ist es vorgesehen, dass die besagte erste mittlere Materialstärke M1 und/oder zweite mittlere Materialstärke M2 im Bereich von 10 bis 180 mm, insbesondere 20 bis 120 mm, insbesondere bevorzugt 30 bis 85 mm, ganz besonders bevorzugt 35 bis 60 mm, liegt. Diese mittleren Materialstärken haben sich für eine gute Schalldämpfung als zweckmäßig erwiesen, wobei größere Materialstärken Nachteile beim Einbau mit sich bringen.

In einigen Ausgestaltungen ist es vorgesehen, dass das zweite und dritte Dämmmaterial ein oder mehrere feuchtigkeitsresistente Materialien ausgewählt aus einer Gruppe bestehend aus EPS, XPS, Mineralwolle, Glaswolle, Kork, Schaumglas und Kokosfaser umfasst oder aus diesen besteht, insbesondere bevorzugt EPS (Expandiertes Polystyrol) und/oder XPS (Polystyrol-Extruderschaumstoff). Besagte Materialien haben sich als feuchtigkeitsresistent erwiesen und zugleich wird keine signifikante Kapillarwirkung entfaltet. Auch können die Materialien besser getrocknet werden, falls sie doch eine geringe Menge an Feuchtigkeit aufnehmen. Mithin bieten diese Materialien einen guten Schutz. Das zweite Dämmmaterial im Sinn der vorliegenden Erfindung muss nicht zwingend schalldämmend wirken. In einer Ausgestaltung wirkt es vorrangig oder ausschließlich wärme- und/oder feuchtigkeitsdämmend, d.h. es verhindert eine Wärme- oder Feuchtigkeitsübertragung. In einer weiteren Ausgestaltung wirkt es auch schalldämmend. Vorzugsweise umfasst oder besteht das zweite Dämmmaterial in einer Ausgestaltung aus Kunststoff, insbesondere besteht überwiegend aus diesem.

In einer weiteren Ausgestaltung ist es vorgesehen, dass die Außenschicht der Naturfaserdämmung mindestens eine Trockenbauplatte und mindestens eine Beschichtung umfasst. Eine Beschichtung im Sinne der vorliegenden Erfindung kann vorzugsweise eine Beschichtung mit einer aushärtenden fluiden oder pastösen Masse sein. Mögliche Beschichtungen sind beispielsweise eine Putzbeschichtung oder eine Farbe. Die Außenschicht also solches unterstützt dem Zusammenhalt zwischen der Naturfaserdämmplatte und dem Abdichtsegment. Dies kann in besonderem Maße durch mindestens eine, insbesondere starre, Trockenbauplatte gewährleistet werden, vorzugsweise wobei besagte Naturfaserdämmplatte und besagtes Abdichtsegment beide mit der mindestens einen Trockenbauplatte verbunden, insbesondere verklebt und/ oder verschraubt, sind. Eine Beschichtung kann einen alternativen Schutz bieten. Eine zweckmäßige Ausgestaltung sieht mindestens zwei Trockenbauplatten, insbesondere genau zwei Trockenbauplatten, vor, wobei eine erste Trockenbauplatte mit einer zweiten Trockenbauplatte verbunden, insbesondere vollflächig verklebt und/oder mit dieser verschraubt, ist. Zwei miteinander verbundene Trockenbauplatten bewirken eine weitergehende Verbesserung des Schallschutzes, insbesondere einen besseren Schallschutz als eine einzelne etwas dickere Trockenbauplatte.

Als zweckmäßig hat es sich erwiesen, wenn die mindestens eine Trockenbauplatte, insbesondere ggf. alle Trockenbauplatten der Naturfaserdämmung, eine dritte mittlere Materialstärke M3 von 6 bis 25 mm, insbesondere von 8 bis 20 mm, vorzugsweise von 10 bis 15 mm, aufweist. Die Beschichtung kann eine vierte mittlere Materialstärke M4 von 5 bis 30 mm, insbesondere von 8 bis 20 mm, vorzugsweise von 9 bis 15 mm, aufweisen. Besagte mittlere Materialstärken haben sich als besonders geeignet erwiesen, um die vorstehend diskutierten Funktionen optimal zu gewährleisten.

Eine Naturfaserdämmung im Sinne der vorliegenden Erfindung betrifft eine Dämmung vor Schall und/oder vor einem Temperaturgefälle, insbesondere Schall, mit Naturfaserstoffen. Die Naturfaserdämmung umfasst Naturfasern und besteht vorzugsweise überwiegend aus diesen und/oder aus Mischungen, insbesondere Verbundwerkstoffen, enthaltend Naturfasern.

Vorzugsweise ist es dabei ferner vorgesehen, dass die Trockenbauplatte eines oder mehrere Materialien ausgewählt aus einer Gruppe bestehend aus Gips, Gipsfasern, Lehm, Holz und Stroh umfasst und/oder, insbesondere gebundene, Naturfasern umfasst. Vorzugsweise ist es alternativ oder zusätzlich vorgesehen, dass die Beschichtung Zement und/oder, insbesondere mineralisch vergüteten, Werktrockenmörtel und/oder Gipsputz umfasst. Zementhaltige Werktrockenmörtel haben sich als besonders geeignet erwiesen, wobei hierdurch Feuchtigkeit gebunden wird. Eine besonders geeignete Trockenbauplatte ist eine Gipskartonplatte und/oder Gipsfaserplatte. Die für die Trockenbauplatte genannten Materialien ermöglicht eine besonders gute Anbindung der Naturfaserdämmplatte und des Abdichtsegments.

In einer Ausgestaltung ist es vorgesehen, dass die Naturfaserdämmung eine erste und eine gegenüberliegende zweite Breitseite aufweist, insbesondere wobei die zweite Breitseite für eine Befestigung an der Wand vorgesehen ist. Zwischen den beiden Breitseiten erstrecken sich umlaufend mindestens eine Schmalseite, vorzugsweise vier Schmalseiten. Vorzugsweise ist es vorgesehen, dass die erste und zweite Breitseite jeweils eine größere Oberfläche aufweisen als jede der Schmalseiten. Vorzugsweise entspricht der mittlere Abstand der Breitseiten im Wesentlichen der Stärke der Naturfaserdämmung. Die Naturfaserdämmung kann vorzugsweise eine quaderförmige Grundform aufweisen. In einer Ausgestaltung wird genaue eine der Schmalseiten überwiegend durch eine Oberfläche des Abdichtsegments ausgebildet, während die anderen Schmalseiten, insbesondere die anderen drei Schmalseiten, überwiegend durch Oberflächen der Naturfaserdämmplatte ausgebildet sind.

In einigen Ausgestaltungen weist die Naturfaserdämmung einen Randdämmstreifen auf, insbesondere einen Randdämmstreifen umfassend ein elastisches und/oder verformbares Dämpfungsmaterial. Der Randdämmstreifen kann vorzugsweise Schwingungen abfangen und eine Übertragung derselben durch den Boden auf die Wand oder umgekehrt dämpfen oder ganz verhindern, insbesondere liegt er vorzugsweise unterhalb des Abdichtsegments vor, insbesondere beim gattungsgemäßem Einbau der Naturfaserdämmung zwischen Boden und Abdichtsegment. In einer zweckmäßigen Ausgestaltung liegt das Abdichtsegment zwischen der Naturfaserdämmplatte und dem Randdämmstreifen vor, insbesondere wobei der Randdämmstreifen quer zur Naturfaserdämmplatte orientiert ist, vorzugsweise horizontal beim gattungsgemäßen Einbau der Naturfaserdämmung. Vorzugsweise sind das Abdichtsegment und der Randdämmstreifen in einer Ausgestaltung unmittelbar benachbart, insbesondere kontaktiert der Randdämmstreifen das Abdichtsegment. Zusätzlich oder alternativ kann es vorgesehen sein, dass der Randdämmstreifen und die Außenschicht unmittelbar benachbart sind, insbesondere einander kontaktieren. Insbesondere bevorzugt ist es jedoch, wenn der Randdämmstreifen sich soweit erstreckt, dass er vor der Außenschicht endet, vorzugsweise wobei die Außenschicht beabstandet vom Boden, insbesondere Estrich, ist. Es hat sich gezeigt, dass ein Randdämmstreifen die Schalldämpfung erheblich verbessert. Vorzugsweise ist der Randdämmstreifen aus einem feuchtigkeitsresistenten Material, beispielsweise einem elastischen und/oder verformbaren Kunststoff gebildet. Die mittlere Höhe des Randdämmstreifens ist vorzugsweise um ein Vielfaches kleiner als die mittlere dritte Höhe H3 des Abdichtsegments und wird parallel zu dieser bestimmt, insbesondere vertikal. Der Boden kann dabei vorzugsweise der Untergrund oder der Estrich sein.

Auch hat sich gezeigt, dass eine verbleibende Feuchtigkeit in der Naturfaserdämmung vorteilhaft sein kann. Hierbei hat sich für die Naturfaserdämmung, insbesondere das erste Dämmmaterial, ein Feuchtigkeitsgehalt von 3 bis 30 Gew.-%, insbesondere von 5 bis 20 Gew.-%, vorzugsweise von 7 bis 18 Gew.-%, als geeignet erwiesen. Die verbleibende Feuchtigkeit verhindert, dass die Naturfasern brüchig werden, so dass Schall besser abgefedert bzw. gedämpft wird.

Für das erste Dämmmaterial hat es sich für die Schalldämmung und auch für eine Wärmedämmung als vorteilhaft erwiesen, wenn enthaltene Pflanzenfasern eine gewisse Länge aufweisen. Als besonders geeignet haben sich Längen von 1,5 bis 20 cm, insbesondere von 2 bis 15 cm, vorzugsweise von 3 bis 11 cm, erwiesen. Vorzugsweise beträgt der Anteil an Pflanzenfasern am ersten Dämmmaterial dabei 5 bis 95 Gew.-%, insbesondere 25 bis 92 Gew.-%, insbesondere bevorzugt 35 bis 90 Gew.-%. Besagte Länge ist besonders geeignet, um Schallschwingungen zu dämpfen.

Vorzugsweise umfasst das erste und/oder zweite Dämmmaterial mindestens ein Flammschutzmittel. Dieses dient zur Brandbekämpfung. Als besonders geeignet haben sich, stickstoffhaltige Phosphate, insbesondere Ammonium-, Melamin- oder Guanidinphosphat, Aluminiumphosphate, Borate, insbesondere Ammonium-, Melamin-, Guanidin-, Kalium- oder Natriumborate, Borsäuren, Borphosphorsäureester, prä-oxidierten Viskosefasern, prä-oxidierten Polyacrylnitril-Fasern, Kohlenstofffasern und Reisschalen oder deren beliebige Mischungen erwiesen.

Vorzugsweise umfasst das erste Dämmmaterial mindestens ein Bindemittel. Als geeignet haben sich Bindemittelfasern, Bindemittelgranulate oder Bindemittelpulver oder beliebige Mischung derselben erwiesen. Als Bindemittelfasern kommen vorzugsweise thermoplastische Mono- oder Multikomponentenfasern zum Einsatz, insbesondere Bikomponentenfasern. Geeignete Bikomponentenfasern können zum Beispiel auf Polyestern oder Polylactiden basieren und/oder Phenolharzfasern umfassen oder darstellen.

Vorzugsweise weist das erste und/oder zweite Dämmmaterial eine Dichte von 10 bis 250 kg/m³, insbesondere 70 bis 150 kg/m³, insbesondere bevorzugt 80 bis 140 kg/m³, auf. Diese Dichten bewirken eine besonders gute Schallschutzdämmung.

Sehr zufriedenstellende Resultate stellen sich bei der erfindungsgemäßen Naturfaserdämmung insbesondere auch dann ein, wenn die Trockenbauplatte verwindungssteif ist und/oder sich nicht oder nur unwesentlich verbiegen lässt ohne zu brechen. Unwesentlich ist eine Verbiegung insbesondere dann, wenn die aus der Verbiegung resultierende Krümmung einem Krümmungsradius entspricht, der größer als 0,1 m, insbesondere größer als 0,5 m, vorzugsweise größer als 1 m, insbesondere bevorzugt größer als 5 m, ganz besonderes bevorzugt größer als 20 m, ist. Dies ermöglicht eine sichere und einfache Handhabung der Naturfaserdämmung.

In einigen weiteren Ausgestaltungen ist es vorgesehen, dass die Außenschicht mit der Naturfaserdämmplatte und/oder Abdichtsegment verklebt ist und/oder die Naturfaserdämmplatte mit dem Abdichtsegment verklebt ist, vorzugsweise wobei der Klebstoff organische Kleber, organische Schäume, mineralisch vergütete Werktrockenmörtel und/oder Gipsputz umfasst.

Die Erfindung betrifft ferner einen Gebäudeteil, insbesondere einen Wandsockel, vorzugsweise Innenraumwandsockel, umfassend eine Gebäudewand, insbesondere eine Innenraumwand, an der eine Naturfaserdämmung, wie sie vorstehend beschrieben wurde, befestigt ist, wobei der Gebäudeteil neben der Gebäudewand auch besagte Naturfaserdämmung umfasst. Der Gebäudeteil weist hinsichtlich der Dämmung die Vorteile der Naturfaserdämmung auf.

Vorzugsweise ist es vorgesehen, dass der Gebäudeteil einen Untergrund und oberhalb des Untergrunds eine Trittschalldämmung, eine Bodendämmung und/oder einen Estrich umfasst, wobei die Naturfaserdämmung bereichsweise zwischen Trittschalldämmung, Bodendämmung und/oder Estrich und Gebäudewand vorliegt, insbesondere das Abdichtsegment zwischen Trittschalldämmung, Bodendämmung und/oder Estrich und Gebäudewand vorliegt, und die Naturfaserdämmung sich vom Untergrund oder aus Richtung des Untergrunds entlang der Gebäudewand erstreckt, insbesondere in Richtung weg vom Untergrund, vorzugsweise im Wesentlichen orthogonal zum Untergrund weg vom Untergrund.

Die Gebäudewand kann Beton, Ziegel, Porenbeton, insbesondere Ytong-Porenbeton, Kalksandstein und/oder Holz umfassen und/oder aus diesen Materialien bestehen. Als besonders geeignet haben sich Massivholz und/oder Brettschichtholz erwiesen. Vorzugsweise sind die Gebäudewand und/oder der Gebäudeteil Bestandteil einer Holzständerkonstruktion und/oder in Form einer Holzständerkonstruktion gefertigt. Der Estrich kann ein Trocken- oder Nassestrich sein, insbesondere ein Nassestrich.

Eine Bodendämmung, insbesondere Bodenwärmedämmung, im Sinne der vorliegenden Erfindung kann vorzugsweise in Form einen Ausgleichschicht und/oder Dämmschüttung vorliegen, insbesondere in Form von Blähton-, Blähglas-, Blähschiefer oder Perlit-Schüttungen, wobei vorzugsweise ein aushärtendes Bindemittel vorgesehen sein kann. Auch Bodendämmungen mit Sandmatten, EPS-Dämmplatten, Holzfaserdämmplatten, Hanfdämmplatten und/oder Pappwaben sind möglich.

In einigen Ausgestaltungen des Gebäudeteils ist es vorgesehen, dass das zweite Dämmmaterial sich vom Untergrund oder aus Richtung des Untergrunds entlang der Naturfaserdämmplatte und/oder parallel zur Gebäudewand erstreckt und zwar über eine durch eine Oberfläche der Trittschalldämmung, eine Oberfläche der Bodendämmung, eine Oberfläche der Rohbetondecke, insbesondere umfassend Beton, Ziegel und/oder Holz, und/oder eine Oberfläche des Estrichs, definierte Ebene hinaus, insbesondere über eine durch die Oberfläche des Estrichs definierte Ebene hinaus. Hierdurch wird ein besonders effektiver Schutz sichergestellt, selbst falls der Untergrund oder Estrich mit einer Flüssigkeit, insbesondere Wasser, bedeckt ist.

In einigen weiteren Ausgestaltungen des Gebäudeteils ist es vorgesehen, dass das zweite Dämmmaterial sich vom Estrich oder aus Richtung des Estrichs entlang der Gebäudewand erstreckt, vorzugsweise oberhalb einer durch eine Oberfläche der Trittschalldämmung, eine Oberfläche der Bodendämmung und/oder eine Oberfläche des Estrichs definierten Ebene. Hierdurch wird ein besonders effektiver Schutz sichergestellt, selbst falls der Untergrund oder Estrich mit einer Flüssigkeit, insbesondere Wasser, bedeckt ist.

Vorzugsweise ist es vorgesehen, dass der Gebäudeteil einen Freiraum zwischen dem Abdichtsegment und/oder zweiten Dämmmaterial und der Gebäudewand aufweist, insbesondere wobei das zweite Dämmmaterial mittelbar oder unmittelbar an der Gebäudewand anliegend fixiert ist. Es hat sich überraschenderweise gezeigt, dass der Freiraum den Schallschutz verbessert. Ein Kontakt zu der Wand wird vermieden, wobei die Schallübertragung von dem Abdichtsegment auf die Wand verringert wird.

In einer ganz besonders bevorzugten Ausgestaltung ist es vorgesehen, dass der Gebäudeteil, insbesondere der Wandsockel, eine Gebäudewand umfasst, an welcher mindestens zwei Naturfaserdämmungen, wie diese vorstehend beschrieben wurden, insbesondere einander gegenüberliegend, befestigt sind. Vorzugsweise handelt es sich dabei um eine Gebäudewand im Massivholzbau, insbesondere mit Brettschichtholz. Ferner ist es bevorzugt, wenn es sich um eine erste Naturfaserdämmung und eine gegenüberliegende zweite Naturfaserdämmung handelt, insbesondere eine erfindungsgemäße erste Naturfaserdämmung und/oder eine erfindungsgemäße zweite Naturfaserdämmung. Vorzugsweise hat die erste Naturfaserdämmung eine andere Dicke, Massendichte und/oder Zusammensetzung als die zweite Naturfaserdämmung. Hierbei ist es besonders bevorzugt, wenn die erste Naturfaserdämmung eine erste mittlere Dicke D1 und die zweite Naturfaserdämmung eine zweite mittlere Dicke D2 aufweist, wobei die zweite mittlere Dicke D2 kleiner als die erste mittlere Dicke D1 ist, insbesondere mindestens 5%, vorzugsweise mindestens 10%, insbesondere bevorzugt mindestens 20%, kleiner. Alternativ oder zusätzlich ist es besonders bevorzugt, wenn die erste Naturfaserdämmung eine erste mittlere Massendichte und die zweite Naturfaserdämmung eine zweite mittlere Massendichte aufweist, wobei die zweite mittlere Massendichte kleiner als die erste mittlere Massendichte ist, insbesondere mindestens 5%, vorzugsweise mindestens 10%, insbesondere bevorzugt mindestens 20%, kleiner. Diese Maßnahmen verbessern den Schallschutz erheblich. Dies wird unter anderem darauf zurückgeführt, dass unterschiedliche Frequenzen, insbesondere im Tieffrequenzbereich, durch die unterschiedlich gefertigten erste und zweite Naturfaserdämmungen absorbiert und/oder erzeugt werden, insbesondere so dass Lücken im Schallschutz geschlossen werden. Vorzugsweise ist die zweite Naturfaserdämmung dabei an einer gegenüberliegenden Seite der Gebäudewand befestigt. In einer Ausgestaltung ist es alternativ oder zusätzlich denkbar, dass die erste Naturfaserdämmung ein erstes Dämmmaterial umfasst, welches nicht identisch mit einem ersten Dämmmaterial der zweiten Naturfaserdämmung ist, d.h. die Zusammensetzung von erster und zweiter Naturfaserdämmung ist unterschiedlich. Auch kann eine der beiden Naturfaserdämmungen mehr erstes Dämmmaterial als die andere umfassen, insbesondere die erste Naturfaserdämmung mehr Hanf als die zweite Naturfaserdämmung. Die erste mittlere Dicke D1 und zweite mittlere Dicke D2 werden dabei vorzugsweise jeweils orthogonal zur Oberfläche der Gebäudewand und/oder orthogonal zur Außenschicht der ersten Naturfaserdämmung bestimmt.

Die Erfindung betrifft ferner ein Verfahren zur Herstellung eines Gebäudeteils, insbesondere des vorstehend beschriebenen Gebäudeteils, mit einer Gebäudewand und einer Naturfaserdämmung, umfassend eine Außenschicht und eine der Außenschicht gegenüberliegende Innenschicht mit einer Naturfaserdämmplatte und einem Abdichtsegment, wobei die Außenschicht mit der Naturfaserdämmplatte und mit dem Abdichtsegment verbunden ist, wobei die Naturfaserdämmplatte ein erstes Dämmmaterial mit mindestens einem Naturfaserstoff umfasst, wobei das Abdichtsegment ein zweites Dämmmaterial, welches feuchtigkeitsresistent ist, umfasst, wobei das zweite Dämmmaterial eines oder mehrere feuchtigkeitsresistente Materialien ausgewählt aus der Gruppe bestehend aus EPS, XPS, Mineralwolle, Glaswolle, Schaumglas und Kokosfaser umfasst und wobei die Außenschicht eine oder mehrere Trockenbauplatten umfasst, insbesondere aus diesen besteht, wobei das Verfahren die folgenden Schritte aufweist:
a) Befestigen, insbesondere Verkleben und/oder Verschrauben, der Naturfaserdämmplatte und des Abdichtsegments an der Gebäudewand,
b) Aufbringen der Außenschicht, umfassend die Trockenbauplatte, auf der Naturfaserdämmplatte und dem Abdichtsegment,
c) Verlegen der Bodendämmung, der Trittschalldämmung und/oder des Estrichs und insbesondere Trocknen der Bodendämmung, der Trittschalldämmung und/oder des Estrichs, vorzugsweise des Estrichs.

Das vorstehend genannte Verfahren bietet einen besonders guten Schutz, insbesondere da überwiegend oder ausschließlich nur das Abdichtsegment mit Feuchtigkeit in Kontakt kommt.

In einer ersten Ausgestaltung ist die Reihenfolge der Schritte wie folgt: a), b) und c) insbesondere, wobei das Abdichtsegment der Naturfaserdämmung auf den Untergrund gestellt oder an diesem fixiert oder benachbart zu diesem fixiert wird. Alternativ ist auch die Reihenfolge c), a) und b) der Schritte erfindungsgemäß bevorzugt.

Die Erfindung betrifft ferner die Verwendung der vorstehend beschriebenen Naturfaserdämmung oder des vorstehend beschriebenen Gebäudeteils zur Dämpfung von Schallwellen. Es hat sich überraschenderweise gezeigt, dass die erfindungsgemäße Naturfaserdämmung eine verbesserte Schalldämmung bewirkt. Die Erfindung betrifft ferner auch die Verwendung der Naturfaserdämmung als Wärmedämmung mit Schallschutz.

Der vorliegenden Erfindung liegt die Erkenntnis zugrunde, dass durch eine geeignete und vorstehend beschriebene Gestaltung einer Naturfaserdämmung ein verbesserter Schallschutz erzielt wird und zudem ein vereinfachtes Einbauen der Naturfaserdämmung ermöglicht wird. Bisherige Maßnahmen für den Schutz vor Schall haben sich als aufwendig erwiesen, wobei ein optimaler Schallschutz nicht erzielt werden konnte.

Weitere Merkmale und Vorteile der Erfindung ergeben sich aus der nachfolgenden Beschreibung, in der Ausführungsbeispiele der Erfindung anhand von schematischen Zeichnungen beispielhaft erläutert werden, ohne dadurch die Erfindung zu beschränken.

Dabei zeigt:
- Figur 1: eine schematische Darstellung einer Querschnittsansicht einer Ausführungsform der erfindungsgemäßen Naturfaserdämmung;
- Figur 2: die schematische Darstellung der Figur 1, wobei die Bezugszeichen der Figur 1 aus Gründen der Übersichtlichkeit weggelassen wurden; und
- Figur 3: eine schematische Darstellung einer Querschnittsansicht einer Ausführungsform des erfindungsgemäßen Gebäudeteils;
- Figur 4: eine schematische Darstellung einer Querschnittsansicht einer weiteren Ausführungsform des erfindungsgemäßen Gebäudeteils;
- Figur 5: eine vereinfachte schematische Darstellung einer Querschnittsansicht einer weiteren Ausführungsform des erfindungsgemäßen Gebäudeteils; und
- Figur 6: eine vereinfachte schematische Darstellung einer Querschnittsansicht einer zu Figur 5 alternativen Ausführungsform des erfindungsgemäßen Gebäudeteils.

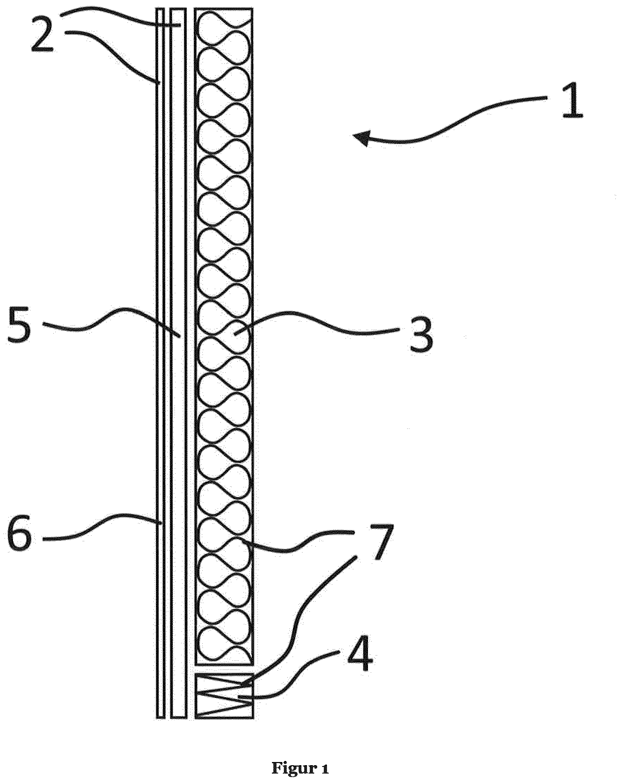

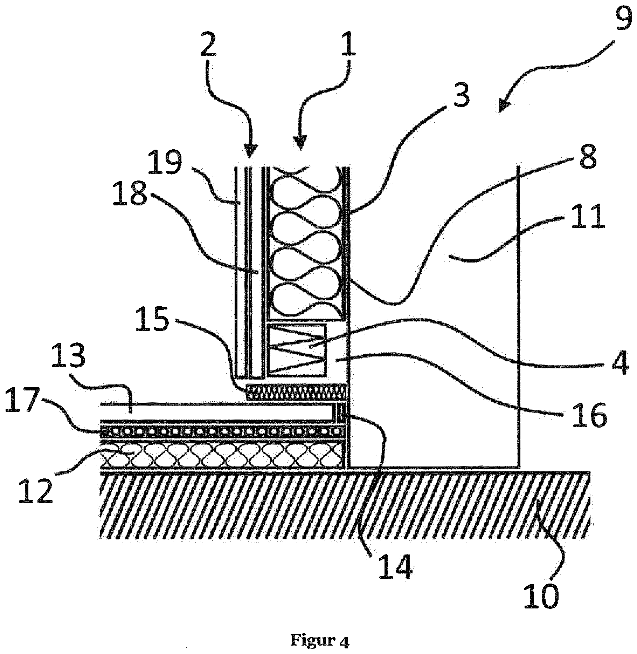

Figur 1 zeigt eine Ausführungsform der Naturfaserdämmung 1 umfassend eine Außenschicht 2 und eine der Außenschicht 2 gegenüberliegende Innenschicht 7 mit einer Naturfaserdämmplatte 3 und einem Abdichtsegment 4, wobei die Außenschicht 2 mit der Naturfaserdämmplatte 3 und mit dem Abdichtsegment 4 verbunden ist, wobei die Naturfaserdämmplatte 3 ein erstes Dämmmaterial mit mindestens einem Naturfaserstoff umfasst, wobei das Abdichtsegment 4 ein zweites Dämmmaterial, welches feuchtigkeitsresistent ist, umfasst. Besagte Außenschicht 2 ist doppellagig aufgebaut und umfasst eine Trockenbauplatte 5 und eine Beschichtung 6. Auch eine einlagige Außenschicht 2 nur mit der Trockenbauplatte 5 ist erfindungsgemäß. Obgleich in dieser Ausführungsform die Trockenbauplatte 5 und eine Beschichtung 6 zu sehen sind, ist es erfindungsgemäß besonders bevorzugt, wenn die Außenschicht 2 mindestens eine Trockenbauplatte 5 aufweist. Auch ein Randdämmstreifen kann vorzugsweise vorgesehen sein, beispielsweise wie in Figur 4 gezeigt, wurde aber hier aus Gründen der Übersichtlichkeit nicht dargestellt.

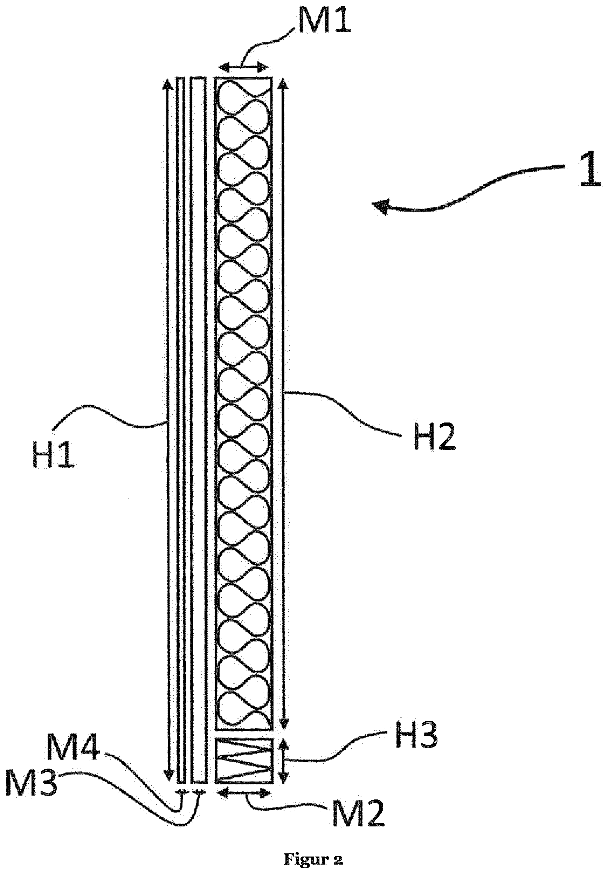

Figur 2 zeigt nochmals die Ausführungsform der Naturfaserdämmung 1 der Figur 1. Die Bezugszeichen der Figur 1 wurden aus Gründen der Übersichtlichkeit überwiegend nicht wiedergegeben und es sei diesbezüglich auf Figur 1 verwiesen. Die Naturfaserdämmung 1 weist parallel zur Außenschicht eine mittlere Höhe H1 auf. Die Naturfaserdämmplatte weist ebenso eine mittlere Höhe H2 auf und das Abdichtsegment eine mittlere Höhe H3. Die mittlere Höhe der Naturfaserdämmung werden auch als erste mittlere Höhe H1, die mittlere Höhe der Naturfaserdämmplatte als zweite mittlere Höhe H2 und die mittlere Höhe des Abdichtsegments als dritte mittlere Höhe H3 bezeichnet. Vorzugsweise ist es unabhängig von dem vorliegenden konkreten Ausführungsbeispiel vorgesehen, dass die erste mittlere Höhe H1 im Wesentlichen der Summe aus der zweiten und dritten mittleren Höhe H2, H3 entspricht, insbesondere die Summe aus zweiter und dritter mittlerer Höhe H2, H3 mindestens 80%, vorzugsweise mindestens 90%, der ersten mittleren Höhe H1 entspricht. H1 entspricht zumindest dann im Wesentlichen der Summe aus H2 und H3, wenn besagte Summe nicht mehr als 20%, insbesondere nicht mehr als 10%, kleiner als H1 ist. Die Naturfaserdämmplatte weist eine erste mittlere Materialstärke M1 und das Abdichtsegment eine zweite mittlere Materialstärke M2 auf, wobei die erste mittlere Materialstärke M1 vorzugsweise größer als oder gleich groß wie die zweite mittlere Materialstärke M2 ist. Ferner ist zu sehen, dass die Trockenbauplatte eine dritte mittlere Materialstärke M3 und die Beschichtung eine vierte mittlere Materialstärke M4 aufweist.

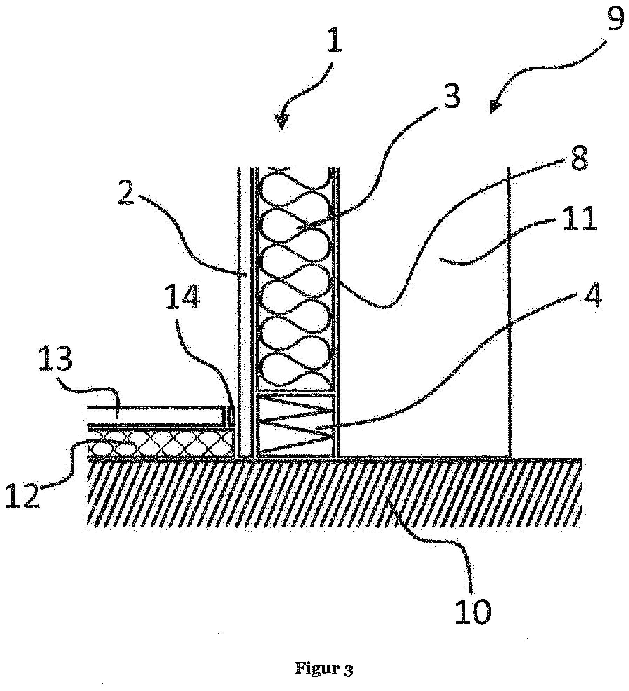

Figur 3 zeigt eine Ausführungsform eines Gebäudeteils 9 in Form eines Wandsockels mit einer Gebäudewand 11, an welcher eine Naturfaserdämmung 1, wie sie vorstehend beschrieben wurde, befestigt ist. Die Naturfaserdämmung 1 ist dabei an eine Gebäudewandoberfläche 8 der Gebäudewand 11 fixiert, insbesondere mit dieser verschraubt und/oder verklebt. Die Naturfaserdämmung 1 umfasst dabei die bereits beschriebene Außenschicht 2 und eine der Außenschicht 2 gegenüberliegende Innenschicht mit der Naturfaserdämmplatte 3 und dem Abdichtsegment 4, wobei die Außenschicht 2 mit der Naturfaserdämmplatte 3 und mit dem Abdichtsegment 4 verbunden ist. Der Gebäudeteil 9 umfasst vorzugsweise einen Untergrund 10 und oberhalb des Untergrunds eine Bodendämmung 12 und einen Estrich 13, wobei die Naturfaserdämmung 1 zwischen den beiden Schichten aus Bodendämmung und Estrich 12, 13 und der gegenüberliegenden Gebäudewand 11 vorliegt und sich vom Untergrund 10 entlang der Gebäudewand 11 vertikal weg von besagten Untergrund 10 erstreckt. Ein Dämmsegment 14 kann zusätzlich zwischen Estrich 13 und Außenschicht 2 vorgesehen sein. Ferner ist zu sehen, dass das zweite Dämmmaterial sich vom Untergrund 10 entlang der Gebäudewand 11 erstreckt und zwar über eine durch eine Oberfläche der Bodendämmung 12 definierte Ebene und auch über eine höher liegende durch die Oberfläche des Estrich 13 definierte Ebene hinaus. Obgleich in Figur 3 auf einen Randdämmstreifen verzichtet wurde, ist es vorzugsweise in einer Ausgestaltung auch möglich, einen solchen unterhalb des Abdichtsegments 4 vorzusehen, wobei ansonsten die Konstruktion des Gebäudeteils analog zur Figur 3 ist. Dies würde die Schalldämpfung nochmals verbessern.

Figur 4 zeigt eine weitere Ausführungsform eines Gebäudeteils 9 in Form eines Wandsockels mit einer Gebäudewand 11, an welcher sich eine erfindungsgemäße Naturfaserdämmung 1 anschließt. Die Naturfaserdämmung 1 ist dabei an einer Gebäudewandoberfläche 8 der Gebäudewand 11 befestigt, insbesondere mit dieser verklebt. Die Naturfaserdämmung 1 umfasst die bereits beschriebene Außenschicht 2 und eine der Außenschicht 2 gegenüberliegende Innenschicht gebildet aus der Naturfaserdämmplatte 3 und dem Abdichtsegment 4, wobei die Außenschicht 2 mit der Naturfaserdämmplatte 3 und mit dem Abdichtsegment 4 verbunden ist. Die Außenschicht 2 besteht in der dargestellten Ausführungsvariante aus einer zweilagigen Trockenbauplatte, wobei eine erste Trockenbauplatte 18 mit einer zweiten Trockenbauplatte 19 verbunden ist. Der Gebäudeteil 9 umfasst einen Untergrund 10 und oberhalb des Untergrunds eine Bodendämmung 12, eine Trittschalldämmung 17 und einen Estrich 13, wobei die Naturfaserdämmung 1 oberhalb der besagten Schichten aus Bodendämmung 12, Trittschalldämmung 17 und Estrich 13 vorliegt und sich aus Richtung des Untergrunds 10 bzw. vom Estrich 13 entlang der Gebäudewand 11 vertikal weg von besagten Untergrund bzw. 10 Estrich 13 erstreckt. In dieser Ausgestaltung umfasst die Naturfaserdämmung 1 auch einen zusätzlichen Randdämmstreifen 15. Ein Dämmsegment 14 kann zusätzlich zwischen Estrich 13 und Außenschicht 2 vorgesehen sein. Ferner ist zu sehen, dass das zweite Dämmmaterial sich parallel zur Gebäudewandoberfläche 8 erstreckt. Die Naturfaserdämmplatte 3 weist eine erste mittlere Materialstärke und das Abdichtsegment 4 eine zweite mittlere Materialstärke auf, wobei die erste größer als die zweite mittlere Materialstärke ist. Hierdurch wird ein Freiraum 16 erzeugt, welcher eine Übertragung von Schall durch das Abdichtsegment 4 auf die Gebäudewandoberfläche 8 vermindert.

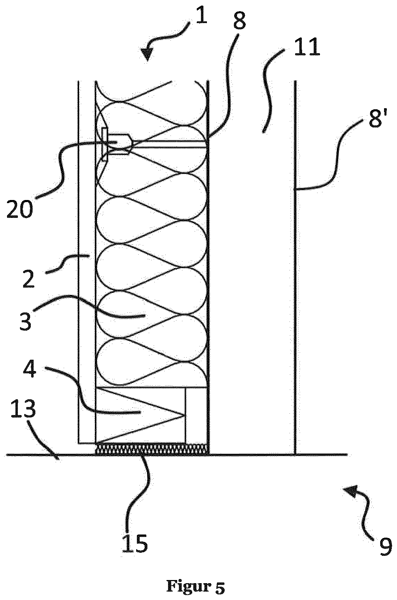

Figur 5 zeigt eine weitere Ausführungsform eines Gebäudeteils 9 in Form eines Wandsockels mit einer Gebäudewand 11, an welcher sich eine erfindungsgemäße Naturfaserdämmung 1 anschließt. Die Naturfaserdämmung 1 ist dabei mit der Gebäudewandoberfläche 8 der Gebäudewand 11 verschraubt und zwar durch eine versenkte Schraube 20. Die Naturfaserdämmung 1 umfasst dabei die bereits beschriebene Außenschicht 2 und eine der Außenschicht 2 gegenüberliegende Innenschicht mit einer Naturfaserdämmplatte 3 und einem Abdichtsegment 4, wobei die Außenschicht 2 mit der Naturfaserdämmplatte 3 und mit dem Abdichtsegment 4 verbunden ist. In dieser Ausgestaltung umfasst die Naturfaserdämmung 1 auch einen zusätzlichen Randdämmstreifen 15, vorzugsweise aus einem elastischen und/oder verformbaren Dämpfungsmaterial. Die Einzelheiten des Estrichs 13 und der dem Estrich 13 unterliegenden Schichten sind nicht wiedergegeben. Zu beachten ist, dass die Gebäudewand 11 neben der Gebäudewandoberfläche 8 eine gegenüberliegende weitere Gebäudewandoberfläche 8` aufweist, wobei erstere als erste Gebäudewandoberfläche 8 und letztere als zweite Gebäudewandoberfläche 8' bezeichnet werden kann. Die gegenüberliegende Gebäudewandoberfläche 8' ist nicht mit der erfindungsgemäßen Naturfaserdämmung versehen.

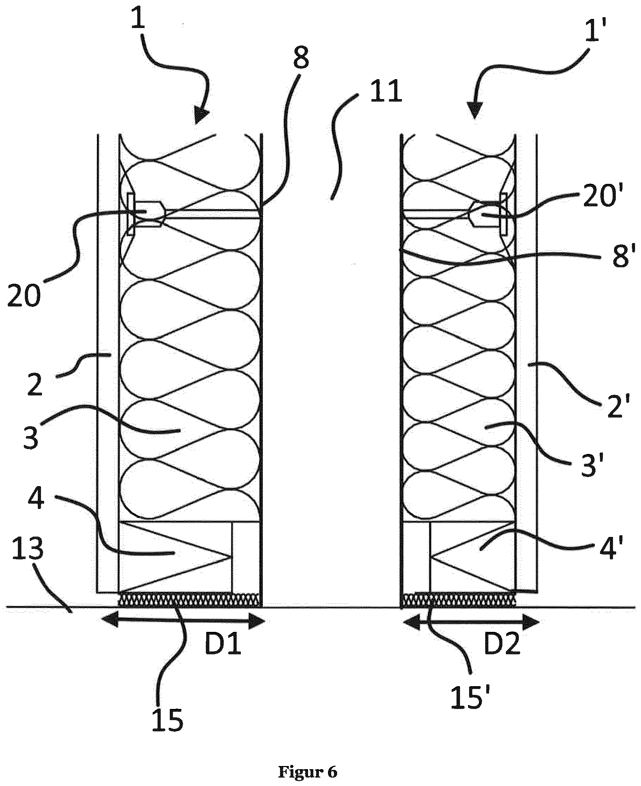

Figur 6 zeigt eine zu Figur 5 alternative Ausführungsform. Die Ausführungsform der Figur 6 grenzt sich dadurch von der Ausführungsform der Figur 5 ab, dass die zweite Gebäudewandoberfläche 8' ebenfalls mit einer erfindungsgemäßen Naturfaserdämmung 1' versehen ist, wobei die Naturfaserdämmung an der ersten Gebäudeoberfläche 8 auch als erste Naturfaserdämmung 1 und die Naturfaserdämmung der zweiten Gebäudeoberfläche 8` auch als zweite Naturfaserdämmung 1' bezeichnet werden können. Die erste Naturfaserdämmung 1 wurde bereits in Figur 5 beschrieben und die dortigen Ausführungen sind analog anwendbar. Die zweite Naturfaserdämmung 1' umfasst die zweite Außenschicht 2' und eine der zweiten Außenschicht 2' gegenüberliegende zweite Innenschicht mit einer zweiten Naturfaserdämmplatte 3' und einem zweiten Abdichtsegment 4', wobei die zweite Außenschicht 2' mit der zweiten Naturfaserdämmplatte 3' und mit dem zweiten Abdichtsegment 4' verbunden ist. In dieser Ausgestaltung umfasst die zweite Naturfaserdämmung 1' auch einen zusätzlichen zweiten Randdämmstreifen 15'. Hervorzuheben ist, dass die zweite Naturfaserdämmung 1' eine geringere zweite mittlere Dicke D2 als die erste mittlere Dicke D1 der ersten Naturfaserdämmung 1 aufweist.

### Bezugszeichen

- 1: Naturfaserdämmung (auch erste Naturfaserdämmung)
- 1': zweite Naturfaserdämmung
- 2: Außenschicht
- 2': Außenschicht der zweiten Naturfaserdämmung
- 3: Naturfaserdämmplatte
- 3': Naturfaserdämmplatte der zweiten Naturfaserdämmung
- 4: Abdichtsegment
- 4': Abdichtsegment der zweiten Naturfaserdämmung
- 5: Trockenbauplatte
- 6: Beschichtung
- 7: Innenschicht
- 8: Gebäudewandoberfläche
- 9: Gebäudeteil
- 10: Untergrund
- 11: Gebäudewand
- 12: Bodendämmung
- 13: Estrich
- 14: Dämmsegment
- 15: Randdämmstreifen
- 15': Randdämmstreifen der zweiten Naturfaserdämmung
- 16: Freiraum
- 17: Trittschalldämmung
- 18: erste Trockenbauplatte
- 19: zweite Trockenbauplatte
- 20: versenkte Schraube
- 20': versenkte Schraube der zweiten Naturfaserdämmung
- M1: erste mittlere Materialstärke
- M2: zweite mittlere Materialstärke
- M3: dritte mittlere Materialstärke
- M4: dritte mittlere Materialstärke
- H1: erste mittlere Höhe der Naturfaserdämmung
- H2: zweite mittlere Höhe
- H3: dritte mittlere Höhe
- D1: erste mittlere Dicke
- D2: zweite mittlere Dicke

## Patentansprüche

1. Naturfaserdämmung (1) umfassend eine Außenschicht (2) und eine der Außenschicht (2) gegenüberliegende Innenschicht (7) mit mindestens einer Naturfaserdämmplatte (3) und mindestens einem Abdichtsegment (4),
wobei die Außenschicht (2) mit der Naturfaserdämmplatte (3) und mit dem Abdichtsegment (4) verbunden ist,
wobei die Naturfaserdämmplatte (3) ein erstes Dämmmaterial mit mindestens einem Naturfaserstoff umfasst,
wobei das Abdichtsegment (4) ein zweites Dämmmaterial, welches feuchtigkeitsresistent ist, umfasst,
**dadurch gekennzeichnet, dass**
das zweite Dämmmaterial eines oder mehrere feuchtigkeitsresistente Materialien ausgewählt aus der Gruppe bestehend aus EPS, XPS, Mineralwolle, Glaswolle, Schaumglas und Kokosfaser umfasst und
dass die Außenschicht (2) eine oder mehrere Trockenbauplatten (5) umfasst, insbesondere aus diesen besteht.

2. Naturfaserdämmung (1) nach Anspruch 1, **dadurch gekennzeichnet, dass**
die Naturfaserdämmplatte (3) um ein Vielfaches größer oder schwerer als das Abdichtsegment (4) ist.

3. Naturfaserdämmung (1) nach Anspruch 1 oder 2, **dadurch gekennzeichnet, dass** die Naturfaserdämmplatte (3) eine erste mittlere Materialstärke (M1) und das Abdichtsegment (4) eine zweite mittlere Materialstärke (M2) aufweist, wobei die erste mittlere Materialstärke (M1) größer, insbesondere mindestens 0,5 cm größer, als die zweite Materialstärke (M2) oder im Wesentlichen gleich groß wie diese ist, und/oder
wobei die erste und/oder zweite mittlere Materialstärke (M1, M2) im Bereich von 10 bis 180 mm, insbesondere von 30 bis 85 mm, insbesondere bevorzugt von 35 bis 60 mm, liegt.

4. Naturfaserdämmung (1) nach einem der vorangehenden Ansprüche, **dadurch gekennzeichnet, dass**
das erste Dämmmaterial einen oder mehrere Naturfaserstoffe ausgewählt aus einer Gruppe bestehend aus Hanf, Jute, Nessel, Flachs, Kenaf, Ramie, Raps, Sisal, Rohrkolben, Schilf, Miscanthus und Stroh umfasst, insbesondere überwiegend hieraus besteht.

5. Naturfaserdämmung (1) nach einem der vorangehenden Ansprüche, **dadurch gekennzeichnet, dass**
die Trockenbauplatte (5) eine dritte mittlere Materialstärke (M3) von 6 bis 25 mm, insbesondere von 8 bis 20 mm, vorzugsweise von 10 bis 15 mm, aufweist.

6. Naturfaserdämmung (1) nach einem der vorangehenden Ansprüche, **dadurch gekennzeichnet, dass**
die Trockenbauplatte (5) eines oder mehrere Materialien ausgewählt aus der Gruppe bestehend aus Gips, Gipsfasern, Lehm, Holz und Stroh umfasst und/oder Naturfaserstoffe umfasst.

7. Naturfaserdämmung (1) nach einem der vorangehenden Ansprüche, **dadurch gekennzeichnet, dass**
die Außenschicht (2) mit der Naturfaserdämmplatte (3) und/oder dem Abdichtsegment (4), insbesondere flächig, verklebt ist und/oder die Naturfaserdämmplatte (3) mit dem Abdichtsegment (4), insbesondere kantenverbunden, verklebt ist, vorzugsweise wobei der Klebstoff organische Kleber, organische Schäume, mineralisch vergütete Werktrockenmörtel oder Gipsputz umfasst.

8. Gebäudeteil (9), insbesondere Wandsockel, umfassend
eine Gebäudewand (11), an welcher mindestens eine Naturfaserdämmung (1) nach einem der vorangehenden Ansprüche befestigt ist.

9. Gebäudeteil (9) nach Anspruch 8, **dadurch gekennzeichnet, dass**
dieser einen Untergrund (10) und oberhalb des Untergrunds eine Bodendämmung (12), eine Trittschalldämmung (17) und/oder einen Estrich (13) umfasst, vorzugsweise wobei die Naturfaserdämmung (1) bereichsweise zwischen Bodendämmung (12), Trittschalldämmung (17) und/oder Estrich (13) und Gebäudewand (11) vorliegt und sich vom Untergrund (10) oder aus Richtung des Untergrunds (10) entlang der Gebäudewand (11) erstreckt.

10. Gebäudeteil (9) nach Anspruch 9, **dadurch gekennzeichnet, dass** das zweite Dämmmaterial sich vom Untergrund (10) oder aus Richtung des Untergrunds (10) entlang der Gebäudewand (11) erstreckt, vorzugsweise über eine durch eine Oberfläche der Trittschalldämmung (17) definierte Ebene, eine Oberfläche der Bodendämmung (12) definierte Ebene und/oder über eine durch eine Oberfläche des Estrichs (13) definierte Ebene hinaus.

11. Gebäudeteil (9) nach einem der Ansprüche 8 bis 10, **dadurch gekennzeichnet, dass** der Gebäudeteil einen Freiraum (16) zwischen dem Abdichtsegment (4) und/oder dem zweiten Dämmmaterial und der Gebäudewand (11) aufweist, insbesondere wobei das zweite Dämmmaterial mittelbar oder unmittelbar anliegend an der Gebäudewand (11) fixiert ist, und/oder
dass der Gebäudeteil (9) eine erste und eine, insbesondere gegenüberliegende, zweite Naturfaserdämmung (1, 1') umfasst, wobei die erste Naturfaserdämmung (1) eine erste mittlere Dicke (D1) und die zweite Naturfaserdämmung (1') eine zweite mittlere Dicke (D2) aufweist, wobei die erste mittlere Dicke (D1) größer als die zweite mittlere Dicke (D2) ist.

12. Verfahren zur Erzeugung eines Gebäudeteils (9), insbesondere nach einem der Ansprüche 8 bis 11, mit einer Gebäudewand (11) und einer Naturfaserdämmung (1), insbesondere nach einem der Ansprüche 1 bis 7, umfassend eine Außenschicht (2) und eine der Außenschicht (2) gegenüberliegende Innenschicht (7) mit einer Naturfaserdämmplatte (3) und einem Abdichtsegment (4), wobei die Außenschicht (2) mit der Naturfaserdämmplatte (3) und mit dem Abdichtsegment (4) verbunden ist, wobei die Naturfaserdämmplatte (3) ein erstes Dämmmaterial mit mindestens einem Naturfaserstoff umfasst, wobei das Abdichtsegment (4) ein zweites Dämmmaterial, welches feuchtigkeitsresistent ist, umfasst,
wobei das zweite Dämmmaterial eines oder mehrere feuchtigkeitsresistente Materialien ausgewählt aus der Gruppe bestehend aus EPS, XPS, Mineralwolle, Glaswolle, Schaumglas und Kokosfaser umfasst und
wobei die Außenschicht (2) eine oder mehrere Trockenbauplatten (5) umfasst, insbesondere aus diesen besteht,
wobei das Verfahren die folgenden Schritte aufweist:
a) Befestigen, insbesondere Verkleben und/oder Verschrauben, der Naturfaserdämmplatte und des Abdichtsegments (4) an einer Gebäudewand (11),
b) Aufbringen der Außenschicht umfassend die Trockenbauplatte auf der Naturfaserdämmplatte und dem Abdichtsegment (4),
c) Verlegen der Bodendämmung (12), der Trittschalldämmung (17) und/oder des Estrichs (13).

13. Verwendung der Naturfaserdämmung (1) nach einem der Ansprüche 1 bis 7 oder des Gebäudeteils (9) nach einem der Ansprüche 8 bis 11 zur Dämpfung von Schallwellen.

## Claims

1. A natural fiber insulation (1) comprising an outer layer (2) and opposite the outer layer (2), an inner layer (7) with at least one natural fiber insulation panel (3) and at least one sealing segment (4),
wherein the outer layer (2) is connected to the natural fiber insulation panel (3) and to the sealing segment (4),
wherein the natural fiber insulation panel (3) comprises a first insulating material with at least one natural fiber material,
wherein the sealing segment (4) comprises a second insulating material which is moisture-resistant,
**characterized in that**
the second insulating material comprises one or more moisture-resistant materials selected from the group consisting of EPS, XPS, mineral wool, glass wool, foam glass, and coconut fiber, and
the outer layer (2) comprises, in particular consists of, one or more dry construction panels (5).

2. The natural fiber insulation (1) according to Claim 1, **characterized in that** the natural fiber insulation panel (3) is many times larger or heavier than the sealing segment (4).

3. The natural fiber insulation (1) according to Claim 1 or 2, **characterized in that** the natural fiber insulation panel (3) has a first average material thickness (Mi), and the sealing segment (4) has a second average material thickness (M2), wherein the first average material thickness (M1) is greater, in particular at least 0.5 cm greater, than or substantially equal to the second material thickness (M2), and/or
wherein the first and/or second average material thickness (M1, M2) is in the range of 10 to 180 mm, in particular 30 to 85 mm, particularly preferably 35 to 60 mm.

4. The natural fiber insulation (1) according to any of the preceding claims, **characterized in that**
the first insulating material comprises, in particular consists predominantly of, one or more natural fiber materials selected from a group consisting of hemp, jute, nettle, flax, kenaf, ramie, rapeseed, sisal, cattail, reed, miscanthus and straw.

5. The natural fiber insulation (1) according to any of the preceding claims, **characterized in that**
the dry construction panel (5) has a third average material thickness (M3) of 6 to 25 mm, in particular 8 to 20 mm, preferably 10 to 15 mm.

6. The natural fiber insulation (1) according to any of the preceding claims, **characterized in that**
the dry construction panel (5) comprises one or more materials selected from the group consisting of gypsum, gypsum fibers, clay, wood and straw and/or comprises natural fiber materials.

7. The natural fiber insulation (1) according to any of the preceding claims, **characterized in that**
the outer layer (2) is bonded to the natural fiber insulation panel (3) and/or to the sealing segment (4), in particular in a surface-to-surface manner, and/or the natural fiber insulation panel (3) is bonded to the sealing segment (4), in particular in an edge-to-edge manner, wherein the adhesive preferably comprises organic adhesives, organic foams, mineral-modified premixed dry mortars or gypsum plaster.

8. A building component (9), in particular wall base, comprising
a building wall (11) to which at least one natural fiber insulation (1) according to any of the preceding claims is attached.

9. The building component (9) according to Claim 8, **characterized in that**
the building component (9) comprises a substrate (10) and, above the substrate, a floor insulation (12), an impact sound insulation (17) and/or a screed (13), wherein the natural fiber insulation (1) is preferably present in regions between the floor insulation (12), impact sound insulation (17) and/or screed (13) and the building wall (11) and extends along the building wall (11) from the substrate (10) or from the direction of the substrate (10).

10. The building component (9) according to Claim 9, **characterized in that** the second insulating material extends along the building wall (11) from the substrate (10) or from the direction of the substrate (10), preferably beyond a plane defined by a surface of the impact sound insulation (17), beyond a plane defined by a surface of the floor insulation (12) and/or beyond a plane defined by a surface of the screed (13).

11. A building component (9) according to any of Claims 8 to 10, **characterized in that** the building component has a free space (16) between the sealing segment (4) and/or the second insulating material and the building wall (11), in particular wherein the second insulating material is fixed directly or indirectly against the building wall (11), and/or in that the building component (9) comprises a first and a second, in particular opposite, natural fiber insulation (1, 1'), wherein the first natural fiber insulation (1) has a first average thickness (D1) and the second natural fiber insulation (1') has a second average thickness (D2), wherein the first average thickness (D1) is greater than the second average thickness (D2).

12. A method for producing a building component (9), in particular according to any of Claims 8 to 11, with a building wall (11) and a natural fiber insulation (1), in particular according to any of Claims 1 to 7, comprising an outer layer (2) and opposite the outer layer (2) an inner layer (7) with a natural fiber insulation panel (3) and a sealing segment (4), wherein the outer layer (2) is connected to the natural fiber insulation panel (3) and to the sealing segment (4), wherein the natural fiber insulation panel (3) comprises a first insulating material with at least one natural fiber material, wherein the sealing segment (4) comprises a second insulating material which is moisture-resistant,
wherein the second insulating material comprises one or more moisture-resistant materials selected from the group consisting of EPS, XPS, mineral wool, glass wool, cellular glass, and coconut fiber, and
wherein the outer layer (2) comprises, in particular consists of, one or more dry construction panels (5),
wherein the method comprises the following steps:
a) attaching, in particular bonding and/or screwing, the natural fiber insulation panel and the sealing segment (4) to a building wall (11),
b) applying the outer layer comprising the dry construction panel to the natural fiber insulation panel and the sealing segment (4),
c) laying the floor insulation (12), the impact sound insulation (17) and/or the screed (13).

13. Use of the natural fiber insulation (1) according to any of Claims 1 to 7 or the building component (9) according to any of Claims 8 to 11 for damping sound waves.

## Revendications

1. Isolant (1) en fibres naturelles comprenant une couche extérieure (2) et une couche intérieure (7) opposée à la couche extérieure (2), avec au moins un panneau isolant (3) en fibres naturelles et au moins un segment d'étanchéité (4),
la couche extérieure (2) est raccordée au panneau isolant (3) en fibres naturelles et au segment d'étanchéité (4),
le panneau isolant (3) en fibres naturelles comprend un premier matériau isolant avec au moins un tissu en fibres naturelles,
le segment d'étanchéité (4) comprend un deuxième matériau isolant, lequel est résistant à l'humidité,
**caractérisé en ce que**
le deuxième matériau isolant comprend un ou plusieurs matériaux résistants à l'humidité sélectionnés dans le groupe comprenant EPS, XPS, laine minérale, laine de verre, verre cellulaire et fibre de coco, et
**en ce que** la couche extérieure (2) comprend un ou plusieurs panneaux de construction secs (5), et est en particulier constituée de ceux-ci.

2. Isolant (1) en fibres naturelles selon la revendication 1, **caractérisé en ce que**
le panneau isolant (3) en fibres naturelles est plusieurs fois plus grand ou plus lourd que le segment d'étanchéité (4).

3. Isolant (1) en fibres naturelles selon la revendication 1 ou 2, **caractérisé en ce que** le panneau isolant (3) en fibres naturelles présente une première épaisseur moyenne de matériau (M1) et le segment d'étanchéité (4) une deuxième épaisseur moyenne de matériau (M2), la première épaisseur moyenne de matériau (M1) étant supérieure, en particulier d'au moins 0,5 cm, à la deuxième épaisseur de matériau (M2), ou étant sensiblement égale à celle-ci, et/ou
la première et/ou la deuxième épaisseur moyenne de matériau (M1, M2) sont comprises entre 10 et 180 mm, en particulier entre 30 et 85 mm, préférentiellement entre 35 et 60 mm.

4. Isolant (1) en fibres naturelles selon l'une des revendications précédentes, **caractérisé en ce que**
le premier matériau isolant comprend un ou plusieurs tissus en fibres naturelles sélectionnés dans un groupe comprenant chanvre, jute, coton écru, lin, kenaf, ramie, colza, sisal, jonc, roseau, miscanthus et paille, et est en particulier constitué majoritairement de ceux-ci.

5. Isolant (1) en fibres naturelles selon l'une des revendications précédentes, **caractérisé en ce que**
le panneau de construction sec (5) présente une troisième épaisseur moyenne de matériau (M3) comprise entre 6 et 25 mm, en particulier entre 8 et 20 mm, préférentiellement entre 10 et 15 mm.

6. Isolant (1) en fibres naturelles selon l'une des revendications précédentes, **caractérisé en ce que**
le panneau de construction sec (5) comprend un ou plusieurs matériaux sélectionnés dans le groupe comprenant plâtre, plâtre armé de fibres, argile, bois et paille et/ou comprend des tissus en fibres naturelles.

7. Isolant (1) en fibres naturelles selon l'une des revendications précédentes, **caractérisé en ce que**
la couche extérieure (2) est collée au panneau isolant (3) en fibres naturelles et/ou au segment d'étanchéité (4), en particulier à plat, et/ou le panneau isolant (3) en fibres naturelles est collé au segment d'étanchéité (4), en particulier en étant raccordé par les bords, l'adhésif comprenant préférentiellement des colles organiques, des mousses organiques, des mortiers secs traités aux minéraux prêts à l'emploi ou de l'enduit de plâtre.

8. Partie de bâtiment (9), en particulier socle mural, comprenant
un mur de bâtiment (11), sur lequel est fixé au moins un isolant (1) en fibres naturelles selon l'une des revendications précédentes.

9. Partie de bâtiment (9) selon la revendication 8, **caractérisé en ce que**
celle-ci comprend un substrat (10) et au-dessus du substrat une isolation de plancher (12), une isolation phonique (17) et/ou une chape (13), l'isolant (1) en fibres naturelles est préférentiellement partiellement présent entre l'isolation de plancher (12), l'isolation phonique (17) et/ou la chape (13) et le mur de bâtiment (11) et s'étend depuis le substrat (10) ou le long du mur de bâtiment (11) en venant du substrat (10).

10. Partie de bâtiment (9) selon la revendication 9, **caractérisé en ce que**
le deuxième matériau isolant s'étend depuis le substrat (10) ou le long du mur de bâtiment (11) en venant du substrat (10), préférentiellement au-delà d'un plan défini par une surface de l'isolation phonique (17), d'un plan défini par une surface de l'isolation de plancher (12) et/ou d'un plan défini par une surface de la chape (13).

11. Partie de bâtiment (9) selon l'une des revendications 8 à 10, **caractérisé en ce que** ladite partie de bâtiment présente un espace libre (16) entre le segment d'étanchéité (4) et/ou le deuxième matériau isolant et le mur de bâtiment (11), le deuxième matériau isolant est en particulier fixé directement ou indirectement contre le mur de bâtiment (11), et/ou
**en ce que** la partie de bâtiment (9) comprend un premier et un deuxième isolant (1, 1') en fibres naturelles, en particulier opposés l'un à l'autre, le premier isolant (1) en fibres naturelles présentant une première épaisseur moyenne (D₁) et le deuxième isolant (1') en fibres naturelles présentant une deuxième épaisseur moyenne (D2), la première épaisseur moyenne (D₁) étant supérieure à la deuxième épaisseur moyenne (D2).

12. Procédé de production d'une partie de bâtiment (9), en particulier selon l'une des revendications 8 à 11, avec un mur de bâtiment (11) et un isolant (1) en fibres naturelles, en particulier selon l'une des revendications 1 à 7, comprenant une couche extérieure (2) et une couche intérieure (7) opposée à la couche extérieure (2), avec un panneau isolant (3) en fibres naturelles et un segment d'étanchéité (4), la couche extérieure (2) est raccordée au panneau isolant (3) en fibres naturelles et au segment d'étanchéité (4), le panneau isolant (3) en fibres naturelles comprend un premier matériau isolant avec au moins un tissu en fibres naturelles, le segment d'étanchéité (4) comprend un deuxième matériau isolant, lequel est résistant à l'humidité,
le deuxième matériau isolant comprend un ou plusieurs matériaux résistants à l'humidité sélectionnés dans le groupe comprenant EPS, XPS, laine minérale, laine de verre, verre cellulaire et fibre de coco, et
la couche extérieure (2) comprend un ou plusieurs panneaux de construction secs (5), et est en particulier constituée de ceux-ci,
ledit procédé comprenant les étapes suivantes :
a) fixation, en particulier collage et/ou vissage du panneau isolant en fibres naturelles et du segment d'étanchéité (4) sur un mur de bâtiment (11),
b) application de la couche extérieure comprenant le panneau de construction sec sur le panneau isolant en fibres naturelles et le segment d'étanchéité (4),
c) pose de l'isolation de plancher (12), de l'isolation phonique (17) et/ou de la chape (13).

13. Utilisation de l'isolant (1) en fibres naturelles selon l'une des revendications 1 à 7 ou de la partie de bâtiment (9) selon l'une des revendications 8 à 11 pour l'isolation phonique.
